# EUROPÄISCHE PATENTSCHRIFT

(11) **EP 2 708 425 B1**
(45) Veröffentlichungstag und Bekanntmachung des Hinweises auf die Patenterteilung: **04.03.2015**
(21) Anmeldenummer: 13004160.1
(22) Anmeldetag: 22.08.2013
(51) Int. Cl.: B60R 25/0215

(54) **Elektrische Lenkverriegelung**
Electric steering lock
Verrouillage de direction électrique

(30) Priorität: 17.09.2012 DE 102012018238
(43) Veröffentlichungstag der Anmeldung: 19.03.2014
(73) Patentinhaber: Huf Hülsbeck & Fürst GmbH & Co. KG, 42551 Velbert (DE)
(72) Erfinder: Indinger, Max, 82131 Gauting (DE)
(74) Vertreter: Schäfer, Matthias W.

(56) Entgegenhaltungen:
- EP-A1- 1 323 600
- EP-A2- 1 982 877
- WO-A2-2006/029401
- DE-A1-102006 059 282
- FR-A1- 2 621 874

## Beschreibung

### Gebiet der Erfindung

Die Erfindung betrifft eine elektrische Lenkverriegelung für ein Fahrzeug mit einem Sperrbolzen, der in einem Leichtbaugehäuse angeordnet ist und durch einen Lenksäulen-seitigen Gehäuseträger gegen gewaltsames Entsperren abgestützt wird.

### Stand der Technik

Aus dem Stand der Technik sind elektrische Lenkverriegelungen bekannt, bei denen die Lenkverriegelung beispielsweise durch einen Elektromotor oder einen Elektromagneten angetrieben wird. Dabei wird der Elektromotor oder der Elektromagnet nur dann zur Entriegelung betrieben, wenn codierte Daten eines elektronischen Schlüssels oder einer Berechtigungskarte als richtig erkannt.

Eine derartige Lenkverriegelung weist einen zwischen einer ersten und einer zweiten Endposition bewegbaren Sperrbolzen zur Verriegelung einer Lenkwelle in einer Lenksäule auf. Der Sperrbolzen ist in der ersten Position, der sogenannten Sperrstellung, in blockierenden Eingriff mit der Lenkwelle bringbar und steht in der zweiten Position, der sogenannten Freigabestellung, außer Eingriff mit der Lenkradwelle. Der Sperrbolzen ist beispielsweise durch den Elektromotor, der durch Anlegen von elektrischer Spannung in der jeweiligen Drehrichtung betrieben wird, bewegbar.

Um einen höheren Diebstahlschutz für ein Kraftfahrzeug zur Verfügung zu stellen, ist die Verriegelungseinrichtung massiv ausgestaltet, beispielsweise mit einem aus Metall bestehenden, an der Lenksäule anbringbarem Gehäuse zur Aufnahme des Antriebs sowie des Sperrbolzens. Eine solche Verriegelungseinrichtung für ein Kraftfahrzeug ist aus der DE 102 46 225 A1 bekannt.

Die EP 1 323 600 A1 offenbart ein Lenksäulenmodul mit einem rohrförmigen Trägergehäuse aus Kunststoff für die Lenksäule und ein in das Trägergehäuse eingesetztes Lenkschlossgehäuse aus Metall, das einen Schließbolzen zum Arretieren der Lenksäule aufnimmt. Dabei wird vorgeschlagen, dass das Trägergehäuse im Bereich seiner Lenksäulenwandung mit einer Verstärkungsplatte aus Metall versehen ist.

Des Weiteren ist aus der DE 10 2011 012 040 A1 eine elektrische Verriegelungseinrichtung bekannt, bei der ein Sperrbolzen der Lenksäule zugeordnet ist. Dadurch kann das Gehäuse der Verriegelungseinrichtung weniger massiv ausgebildet sein.

Schließlich ist aus der EP 1982 877 A2 eine elektrische Verriegelungseinrichtung mit einer Struktur aus einem Aufnahmebereich und einem Anlagebereich zur Aufnahme einer Lenkstange bekannt. Hierbei umfasst die Struktur eine metallische Einlage, welche zumindest teilweise in dem Anlagebereich aufgenommen ist, und einen äußeren Holkörper aus Kunststoff, der an die metallische Einlage angespritzt ist.

Vor dem Hintergrund von Kosteneinsparungen und unterschiedlichen Sicherheitsanforderungen an eine Lenkverriegelung, wird seitens der Kfz-Hersteller inzwischen auch eine Lenkverriegelungsvariante mit Leichtbaugehäuse gefordert, bei dem die Führung des Sperrbolzens Lenksäulen-seitig in einem Gehäuseträger erfolgen soll. Dies erfordert allerdings hohe Passgenauigkeit der Lenksäulen-seitigen Sperrbolzenführung, da das rückwärtige Ende des Sperrbolzens i.d.R. über einen Betätiger in die Hubkurve eines Antriebsrads eingreift. Sofern die hierfür erforderliche Passgenauigkeit nicht gewährleistet werden kann, führt dies zu einer Fehlfunktion der Lenkverriegelung. Ferner hat diese Ausgestaltung den Nachteil, dass der Sperrbolzen ohne Führung aus dem Leichtbaugehäuse hervorsteht und so anfällig für Beschädigung bei Transport und Montage ist.

Daher liegt der vorliegenden Erfindung die Aufgabe zugrunde, eine elektrische Lenkverriegelung, bei der die Bolzenführung zumindest teilweise einem Lenksäulen-seitigen Gehäuseträger zugeordnet ist, und einen Gehäuseträger zur Aufnahme einer entsprechenden elektrischen Lenkverriegelung zur Verfügung zu stellen, die die Nachteile des Standes der Technik vermeiden. Ferner sollen die erfindungsgemäßen Vorrichtungen einfach und kostengünstig zu fertigen sein. Schließlich soll die elektrische Lenkverriegelung noch einen Transportschutz vor dem Einbau aufweisen.

Diese Aufgabe wird durch eine elektrische Lenkverriegelung für ein Fahrzeug mit den Merkmalen des Anspruchs 1 und einen Gehäuseträger zur Aufnahme einer entsprechenden elektrischen Lenkverriegelung nach Anspruch 11 gelöst. Vorteilhafte Ausführungsformen und Weiterbildungen der Erfindung werden in den Unteransprüchen beschrieben.

Hierdurch wird eine elektrische Lenkverriegelung, bei der die Bolzenführung zumindest teilweise einem Lenksäulen-seitigen Gehäuseträger zugeordnet ist, und ein Gehäuseträger zur Aufnahme einer entsprechenden elektrischen Lenkverriegelung zur Verfügung gestellt, die die Nachteile des Standes der Technik vermeiden. Ferner sind die erfindungsgemäßen Vorrichtungen einfach und kostengünstig zu fertigen und weisen einen Transportschutz vor dem Einbau auf.

Erfindungsgemäß weist ein Gehäuse einer elektrische Lenkverriegelung mit einem Leichtbaugehäuse zum Einbau in einen Lenksäulen-seitigen Gehäuseträger ein Gehäuseunterteil auf, an dem eine Antriebseinheit und ein Sperrbolzen angeordnet sind, wobei das Gehäuseunterteil eine Durchtrittsöffnung für den Sperrbolzen und partielle Führungselemente aufweist, die den Sperrbolzenquerschnitt nicht voll umschließen und an der Außenseite des Gehäuseunterteils hervorstehen. Hierdurch wird die Aufgabe derart gelöst, dass die partiellen Führungselemente nur geringe Kräfte auf das Leichtbaugehäuse übertragen aber dennoch den aus dem Gehäuse hervorstehenden Sperrbolzen vor Beschädigung schützen.

Eine bevorzugte Ausführungsform der Erfindung sieht vor, dass der Sperrbolzen in seiner Freigabestellung nicht oder nur unwesentlich über die partiellen Führungselemente hervorsteht. Dadurch wird der Sperrbolzen bei Transport und Montage wirksam vor Beschädigung geschützt.

Eine weitere bevorzugte Ausführungsform der Erfindung sieht vor, dass die partiellen Führungselemente zumindest teilweise ins Gehäuseinnere verlängert sind. Dies erlaubt eine Führung über zumindest einen Großteil des Verschiebewegs des Sperrbolzens.

Noch eine weitere bevorzugte Ausführungsform der Erfindung sieht vor, dass die partiellen Führungselemente den Sperrbolzen jeweils nur an seinen Schmalseiten bzw. in Lenksäulenachsenrichtung führen. Da die partiellen Führungselemente nur für eine geringe Krafteinleitung in das Leichtbaugehäuse vorgesehen sind, werden mögliche auf einen Sperrbolzen wirkende Querkräfte nicht über die partiellen Führungselemente sondern über den Gehäuseträger aufgenommen.

Ferner sieht eine weitere bevorzugte Ausführungsform der Erfindung vor, dass zumindest das Gehäuseunterteil und/oder die partiellen Führungselemente aus Kunststoff hergestellt sind. Dies stellt eine kosten- und gewichtsoptimierte Herstellungsweise dar.

Noch eine bevorzugte Ausführungsform der Erfindung sieht vor, dass die partiellen Führungselemente als sich gegenüberliegende U-förmige Schienen mit Versteifungsstegen ausgebildet sind. Dies kann insbesondere bei im Wesentlichen rechteckförmigen oder gestuften Sperrbolzenquerschnitt vorteilhaft sein.

Eine bevorzugte Ausführungsform der Erfindung sieht vor, dass die partiellen Führungselemente mit dem Gehäuseunterteil einstückig ausgebildet sind. Dies führt zu einer weiteren Kosten und Gewichtsoptimierung.

Außerdem sieht eine bevorzugte Ausführungsform der Erfindung vor, dass die partiellen Führungselemente mit dem Sperrbolzen eine Spielpassung aufweisen. Dies ermöglicht ein ungehindertes Verschieben des Sperrbolzens.

Eine weiterhin bevorzugte Ausführungsform der Erfindung sieht vor, dass der Sperrbolzen als ein im Wesentliches rechteckförmiges Profil ausgebildet ist, wobei seine den U-förmigen Schienen der partiellen Führungselemente zugewandten Schmalseiten optionale Aussparungen aufweisen. Durch die optionalen Aussparungen kommt ein gestufter Querschnitt zustande.

Schließlich sieht eine bevorzugte Ausführungsform der Erfindung vor, dass die partiellen Führungselemente zur Aufnahme in dem Gehäuseträger integrierbar sind.

Erfindungsgemäß weist ein wannenförmig ausgeformter Gehäuseträger zur Aufnahme einer elektrischen Lenkverriegelung mit einem Leichtbaugehäuse einen Führungsschacht zur Aufnahme eines Sperrbolzens mit partiellen Führungselementen auf. Hierdurch wird eine Lenksäulen-seitige Integration des Gehäuses möglich.

Eine bevorzugte Ausführungsform des Gehäuseträgers sieht vor, dass in dem Führungsschacht seitliche Führungsflanken vorgesehen sind. Diese können zur Aufnahme vom am Sperrbolzen wirkenden Querkräften dienen.

Eine weitere bevorzugte Ausführungsform des Gehäuseträgers sieht vor, dass am freien Ende des Führungsschachts ein umlaufendes Abschlussband vorgesehen ist. Dies kann an der Stelle mit den größten über den Sperrbolzen eingeleiteten Kräften und dem längsten Hebel der partiellen Führungselemente für einen optimierten Kraftfluss sorgen.

Noch eine weitere bevorzugte Ausführungsform des Gehäuseträgers sieht vor, dass die Führungsflanken eine Führungslänge von 15mm bis 50mm, vorzugsweise von 28mm aufweisen. Die Längen können jedoch in Abhängigkeit von der Länge des Sperrbolzens variieren.

Schließlich sieht eine bevorzugte Ausführungsform des Gehäuseträgers vor, dass der Gehäuseträger einstückig mit dem Führungsschacht, Führungsflanken und Abschlussband aus einer Magnesiumlegierung hergestellt ist. Dies stellt einen besonders sicheren Aufbau dar.

### Kurze Beschreibung der Zeichnungen

Nachfolgend wird die Erfindung anhand eines Ausführungsbeispiels zusammen mit den beigefügten Zeichnungen erläutert. Dazu zeigt:
Figur 1 eine perspektivische Ansicht eines Gehäuses einer Lenkverriegelung mit einem Sperrbolzen gemäß einer bevorzugten Ausführungsform der vorliegenden Erfindung;
Figur 2 eine Schnittansicht des Gehäuses der Lenkverriegelung gemäß einer bevorzugten Ausführungsform der vorliegenden Erfindung;
Figur 3 eine perspektivische Ansicht eines Gehäuseträgers der Lenkverriegelung von oben gemäß einer bevorzugten Ausführungsform der vorliegenden Erfindung;
Figur 4 eine perspektivische Schnittansicht des Gehäuseträgers der Lenkverriegelung gemäß einer bevorzugten Ausführungsform der vorliegenden Erfindung;
Figur 5 eine perspektivische Ansicht der Lenkverriegelung gemäß einer bevorzugten Ausführungsform der vorliegenden Erfindung;
Figur 6 eine Schnittdarstellung der Lenkverriegelung gemäß einer bevorzugten Ausführungsform der vorliegenden Erfindung und

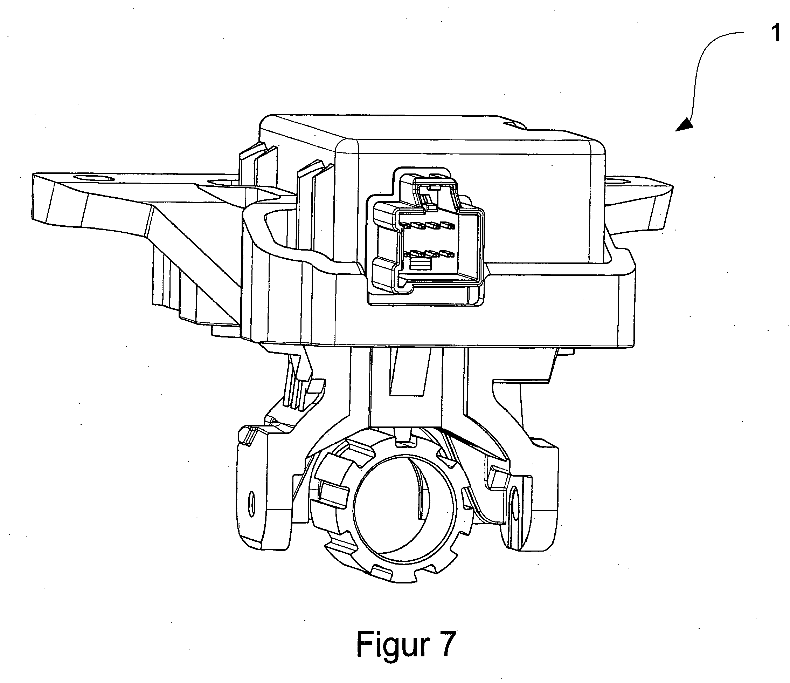

Figur 7 eine perspektivische Ansicht der Lenkverriegelung gemäß einer bevorzugten Ausführungsform der vorliegenden Erfindung.

Nachfolgend beziehen sich Richtungsangaben auf die Zeichnungsebene bzw. auf die translatorische Bewegungsrichtung des Sperrbolzens sofern sich aus dem Text nichts anderes ergibt.

### Detaillierte Beschreibung einer bevorzugten Ausführungsform

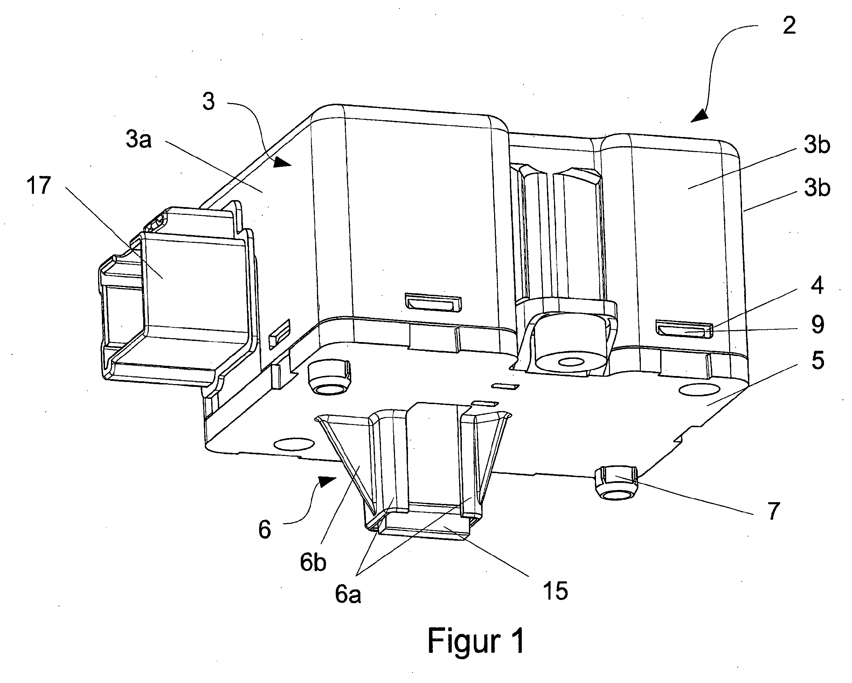

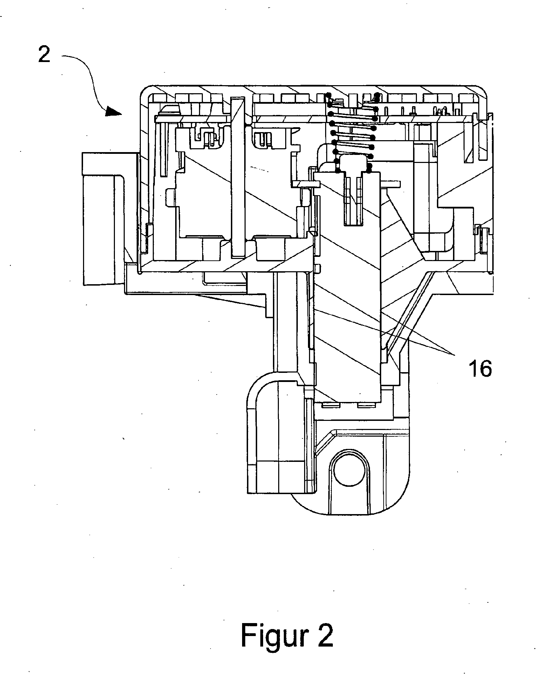

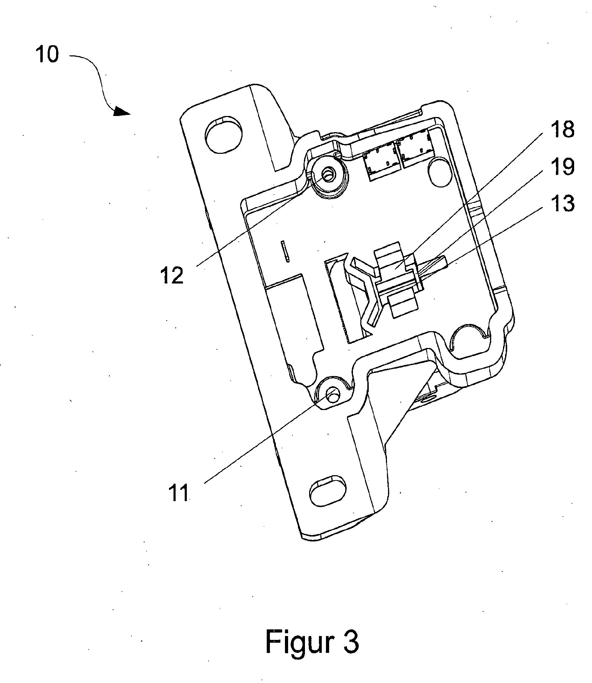

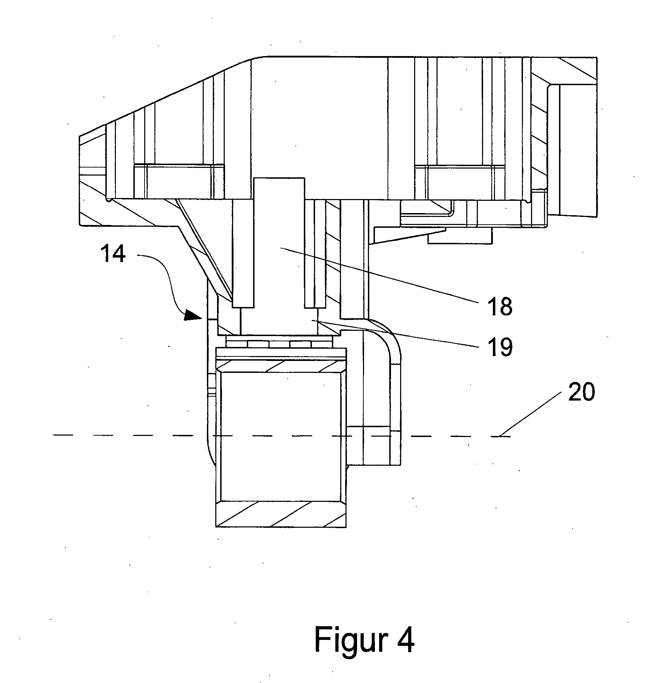

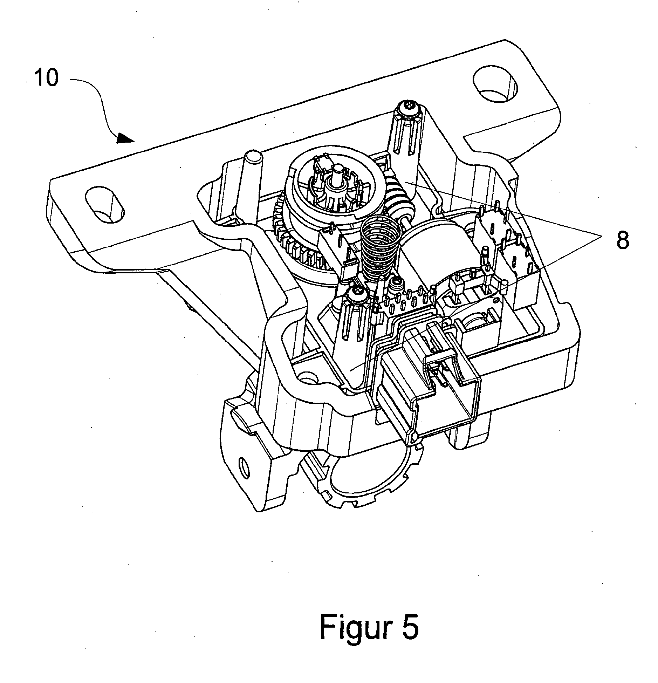

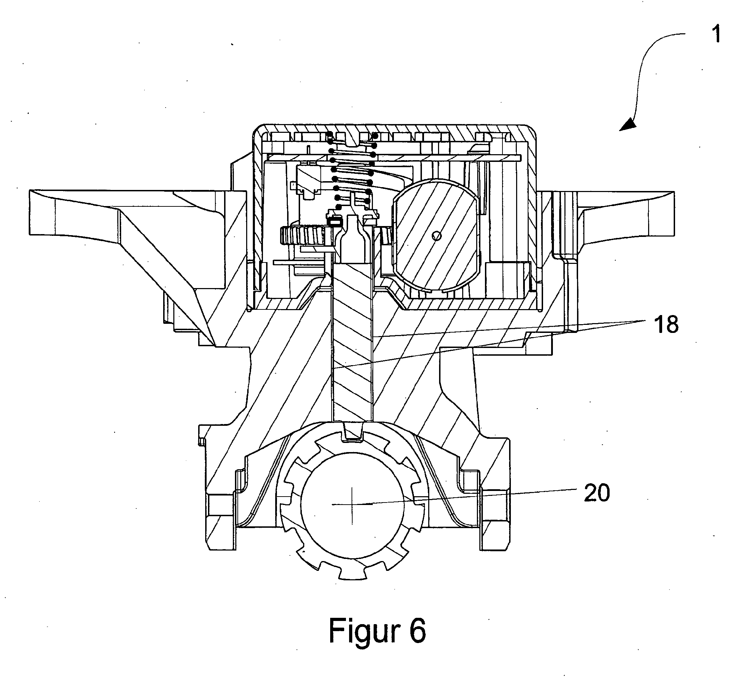

Die Figuren 1 bis 6 zeigen eine bevorzugte Ausführungsform einer elektrischen Lenkverriegelung 1 gemäß der vorliegenden Erfindung.

Die elektrische Lenkverriegelung 1 weist eine Antriebseinheit, einen Sperrbolzen 15 und ein aus Kunststoff im Spritzgußverfahren hergestelltes Gehäuse 2 auf. Das Gehäuse 2 ist zweiteilig aus einem Gehäuseoberteil 3 und einem Gehäuseunterteil 5 ausgebildet.

An dem Gehäuseunterteil 5 ist eine Durchtrittsöffnung für den Sperrbolzen 15 vorgesehen.

Zur im Wesentlichen geradlinigen Führung des Sperrbolzens 15 zwischen einer Sperrstellung zur Sperrung einer Lenksäule 20 und einer Freigabestellung zur Freigabe der Lenksäule 20 sind partielle Führungselemente 6 für den Sperrbolzen 15 an der Außenseite des Gehäuseunterteils 5 angeordnet, die von diesem senkrecht hervorstehen. Diese partielle Führungselemente 6 erstrecken sich auch zumindest teilweise in das Gehäuse hinein und stellen so die Führung des Sperrbolzens über seinen gesamten Verfahrweg sicher. Dazu sind die partielle Führungselemente 6 so lang ausgebildet, dass der Sperrbolzen 15 in einer Freigabestellung nur unwesentlich über die partiellen Führungselemente 6 hervorsteht, um so den Sperrbolzen 15 während des Transportes zu schützen.

Die Partielle Führungselemente 6 sind wiederum aus Kunststoff hergestellt und führen den im Wesentlichen rechteckigen Sperrbolzen 15 jeweils nur an seinen Schmalseiten, d.h. sie nehmen Kräfte im Wesentlichen nur in Lenksäulenachsenrichtung auf. Zur Erhöhung der Steifigkeit der partielle Führungselemente 6 sind diese als U-förmige Schienen 6a mit Versteifungsstegen 6b ausgebildet. In dieser Ausführungsform sind die Versteifungsstege 6b keilförmig ausgeformt. Dabei sind die partielle Führungselemente 6 und die Versteifungsstege 6b mit dem Gehäuseunterteil 5 einstückig ausgebildet.

Zwischen den partielle Führungselementen 6 wird der Sperrbolzen 15 an seinen Schmalseiten in den U-förmigen Schienen 6a der partielle Führungselemente 6 mit einer Spielpassung 16 geradlinig geführt. Dadurch wird das Risiko eines Verkantens und Verklemmens des Sperrbolzens 15 während seines im Wesentlichen geradlinigen Verfahrens zwischen einer sogenannten Sperrstellung und einer sogenannten Freigabestellung innerhalb der partielle Führungselemente reduziert und damit die Betriebssicherheit erhöht.

Der Sperrbolzen 15 weist eine quaderförmige Gestalt auf und weist einen im Wesentlichen rechteckförmigen Querschnitt auf, wobei seine den U-förmigen Schienen 6a zugewandten Schmalseiten Aussparungen 15a aufweisen. Das Gehäuse 2, die Antriebseinheit und der Sperrbolzen 15 ist als eine Einheit mit dem Gehäuseträger 10 komplementär verbindbar.

Zusätzlich sind im Gehäuseunterteil 5 asymmetrisch angeordnete Befestigungslöcher 8 angeordnet und an der Unterseite des Gehäuseunterteils 5 zylinderförmige Zentrierungen 7 ausgebildet. Dadurch wird eine einfache, passgenaue und verwechslungssichere Montage des Gehäuses 2 an einem Gehäuseträger 10 zur Verfügung gestellt.

Ferner ist der aus einer Magnesiumlegierung hergestellte Gehäuseträger 10 wannenförmig ausgeformt und weist Zentrierbohrungen 11, Gehäuseträgerbefestigungslöcher 12 und eine Führungsdurchtrittsöffnung 13 auf. Die Führungsdurchtrittsöffnung 13 ist im Wesentlichen zentral auf einer Bodenfläche des Gehäuseträgers 10 vorgesehen. Die Zentrierbohrungen 11 und die Gehäuseträgerbefestigungslöcher 12 sind ebenfalls in der Bodenfläche des Gehäuseträgers 10 angeordnet. Durch die Zentrierbohrungen 11 werden die zylinderförmige Zentrierungen 7 des Gehäuses 2 wannenseitig innen passgenau aufgenommen. Die Gehäuseträgerbefestigungslöcher 12 sind ebenfalls asymmetrisch angeordnet wie die Befestigungslöcher 8. Dadurch ist das Gehäuse 2 mit dem Gehäuseträger 10 verwechslungssicher verschraubbar. Von der Führungsdurchtrittsöffnung 13 erstreckt sich senkrecht an der Unterseite der Bodenfläche des Gehäuseträgers 10 nach außen ein Führungsschacht 14 zum Einführen der partiellen Führungselemente 6 des Gehäuses 2. Darin werden sowohl die U-förmige Schienen 6a als auch die Versteifungsstege 6b gehalten und fixiert.

Ferner sind in dem Führungsschacht 14 quer zur Lenksäulenachsenrichtung seitliche Führungsflanken 18 zum seitlichen Führen und Abstützen des Sperrbolzens 15 ausgebildet. Diese Führungsflanken 18 erstrecken sich bei auf dem Gehäuseträger 10 montiertem Gehäuse 2 in das Gehäuse 2 hinein. Die Führungsflanken 18 weisen je nach Länge des Sperrbolzens eine Flankenlänge von jeweils 15 bis 50 mm, vorzugsweise 28 mm auf. Dabei sind die Führungsflanken 18 in dieser Ausführungsform einstückig mit dem Gehäuseträger 10 ausgebildet. An der Austrittsöffnung des Sperrbolzens 15 aus dem Führungsschacht 14, umschließen die Führungsflanken 18 den Sperrbolzen 15 als umlaufendes Abschlussband 19 vollständig. Die Führungsflanken 18 und das einstückig damit verbundene Abschlussband 19 dienen dazu, im Falle eines gewaltsamen Entriegelungsversuchs der Lenkverriegelung die auf den Sperrbolzen wirkenden Querkräfte aufzunehmen und auf den Gehäuseträger zu übertragen. Hierbei nehmen die aus Kunststoff hergestellten partiellen Führungselemente 6 lediglich geringe Längskräfte auf.

An dem Gehäuseunterteil 5 sind senkrecht in Richtung Gehäuseoberteil 3 ragende, keilförmig endende Stege als Clips 9 sowohl an den Längsseiten als auch an den Querseiten ausgeformt. Das Gehäuseoberteil 3 weist eine quaderförmige Grundform auf. An einer Vorderfläche 3a, den Seitenflächen 3b und einer Rückfläche 3c sind schlitzförmige Einschnitte als Klemmaussparungen 4 ausgebildet. Zusätzlich ist an dem Gehäuseoberteil 3 eine Aussparung zur Aufnahme eines Steckers 17 vorgesehen. Somit ist das Gehäuseoberteil 3 durch die Clips 9 mit dem Gehäuseunterteil 5 formschlüssig in rastenden Eingriff bringbar.

### Bezugszeichenliste

- 1: elektrische Lenkverriegelung
- 2: Gehäuse
- 3: Gehäuseoberteil
- 3a: Vorderfläche
- 3b: Seitenfläche
- 3c: Rückfläche
- 4: Klemmaussparung
- 5: Gehäuseunterteil
- 6: Partielles Führungselement
- 6a: Schiene
- 6b: Versteifungssteg
- 7: Zentrierung
- 8: Befestigungsloch
- 9: Clip
- 10: Gehäuseträger
- 11: Zentrierbohrung
- 12: Gehäuseträgerbefestigungsloch
- 13: Führungsdurchtrittsöffnung
- 14: Führungsschacht
- 15: Sperrbolzen
- 15a: Aussparung
- 16: Spielpassung
- 17: Stecker
- 18: Führungsflanke
- 19: Abschlussband
- 20: Lenksäule

## Patentansprüche

1. Elektrische Lenkverriegelung (1) mit einem Leichtbaugehäuse zum Einbau in einen Lenksäulen-seitigen Gehäuseträger, wobei das Gehäuse ein Gehäuseunterteil (5) aufweist, an dem eine Antriebseinheit und ein Sperrbolzen (15) angeordnet sind, wobei das Gehäuseunterteil (5) eine Durchtrittsöffnung für den Sperrbolzen (15) aufweist, **dadurch gekennzeichnet, dass**
das Gehäuseunterteil (5) partielle Führungselemente (6) aufweist, die den Sperrbolzenquerschnitt nicht voll umschließen und an der Außenseite des Gehäuseunterteils (5) hervorstehen.

2. Elektrische Lenkverriegelung (1) nach Anspruch 1, wobei der Sperrbolzen (15) in seiner Freigabestellung nicht oder nur unwesentlich über die partiellen Führungselemente (6) hervorsteht.

3. Elektrische Lenkverriegelung (1) nach einem der vorhergehenden Ansprüche, wobei die partiellen Führungselemente (6) zumindest teilweise ins Gehäuseinnere verlängert sind.

4. Elektrische Lenkverriegelung (1) nach einem der vorhergehenden Ansprüche, wobei die partiellen Führungselemente (6) den Sperrbolzen (15) jeweils nur an seinen Schmalseiten bzw. in Lenksäulenachsenrichtung führen.

5. Elektrische Lenkverriegelung (1) nach einem der vorhergehenden Ansprüche, wobei zumindest das Gehäuseunterteil (5) und/oder die partiellen Führungselemente (6) aus Kunststoff hergestellt sind.

6. Elektrische Lenkverriegelung (1) nach einem der vorhergehenden Ansprüche, wobei die partiellen Führungselemente (6) als sich gegenüberliegende U-förmige Schienen (6a) mit Versteifungsstegen (6b) ausgebildet sind.

7. Elektrische Lenkverriegelung (1) nach einem der vorhergehenden Ansprüche, wobei die partiellen Führungselemente (6) mit dem Gehäuseunterteil (5) einstückig ausgebildet sind.

8. Elektrische Lenkverriegelung (1) nach einem der vorhergehenden Ansprüche, wobei die partiellen Führungselemente (6) mit dem Sperrbolzen (15) eine Spielpassung aufweisen.

9. Elektrische Lenkverriegelung (1) nach einem der vorhergehenden Ansprüche, wobei der Sperrbolzen (15) als ein im Wesentliches rechteckförmiges Profil ausgebildet ist, wobei seine den U-förmigen Schienen (6a) der partiellen Führungselemente zugewandten Schmalseiten optionale Aussparungen (15a) aufweisen.

10. Elektrische Lenkverriegelung (1) nach einem der vorhergehenden Ansprüche, wobei die partiellen Führungselemente (6) zur Aufnahme in dem Gehäuseträger (10) integrierbar sind.

11. Gehäuseträger (10) zur Aufnahme einer elektrischen Lenkverriegelung (1) mit einem Leichtbaugehäuse, wobei das Gehäuse ein Gehäuseunterteil (5) aufweist, an dem eine Antriebseinheit und ein Sperrbolzen (15) angeordnet sind, wobei das Gehäuseunterteil (5) eine Durchtrittsöffnung für den Sperrbolzen (15) aufweist, wobei der Gehäuseträger (10) wannenförmig ausgeformt ist, **dadurch gekennzeichnet, dass**
das Gehäuseunterteil (5) partielle Führungselemente (6) aufweist, die den Sperrbolzenquerschnitt nicht voll umschließen und an der Außenseite des Gehäuseunterteils (5) hervorstehen und dass
der Gehäuseträger (10) einen Führungsschacht (14) zur Aufnahme des Sperrbolzens mit den partiellen Führungselementen (6) aufweist.

12. Gehäuseträger (10) nach Anspruch 11, wobei in dem Führungsschacht seitliche Führungsflanken (18) vorgesehen sind.

13. Gehäuseträger (10) nach Anspruch 11 oder 12, wobei am freien Ende des Führungsschachts (14) ein umlaufendes Abschlussband (19) vorgesehen ist.

14. Gehäuseträger (10) nach Anspruch 11 bis 13, wobei die Führungsflanken (18) eine Führungslänge von 15mm bis 50mm, vorzugsweise von 28mm aufweisen.

15. Gehäuseträger (10) nach Anspruch 11 oder 14, wobei der Gehäuseträger einstückig mit dem Führungsschacht (14), Führungsflanken (18) und Abschlussband (19) aus einer Magnesiumlegierung hergestellt ist.

## Claims

1. Electric steering lock (1) with a lightweight housing for installation in a housing support on the steering column, wherein the housing has a lower housing part (5) on which a drive unit and a locking bolt (15) are disposed, wherein the lower housing part (5) has a passage opening for the locking bolt (15), **characterised in that** the lower housing part (5) has partial guide elements (6) which do not fully surround the locking bolt cross-section and project on the outer face of the lower housing part (5).

2. Electric steering lock (1) according to Claim 1, wherein the locking bolt (15) in its release position does not project or only projects insignificantly over the partial guide element (6).

3. Electric steering lock (1) according to one of the preceding claims, wherein the partial guide elements (6) are extended at least partially into the interior of the housing.

4. Electric steering lock (1) according to one of the preceding claims, wherein the partial guide elements (6) guide the locking bolt (15) in each case only on its narrow sides or in the direction of the steering column axis.

5. Electric steering lock (1) according to one of the preceding claims, wherein at least the lower housing part (5) and/or the partial guide elements (6) are produced from plastics material.

6. Electric steering lock (1) according to one of the preceding claims, wherein the partial guide elements (6) are formed as opposing U-shaped tracks (6a) with reinforcing webs (6b).

7. Electric steering lock (1) according to one of the preceding claims, wherein the partial guide elements (6) are formed integrally with the lower housing part (5).

8. Electric steering lock (1) according to one of the preceding claims, wherein the partial guide elements (6) are having a clearance fit with the locking bolt (15).

9. Electric steering lock (1) according to one of the preceding claims, wherein the locking bolt (15) is formed as a substantially rectangular profile, wherein its narrow sides facing the U-shaped tracks (6a) of the partial guide elements have optional cutouts (15a).

10. Electric steering lock (1) according to one of the preceding claims, wherein the partial guide elements (6) can be integrated for accommodation in the housing support (10).

11. Housing support (10) to accommodate an electric steering lock (1) with a lightweight housing for installation in a housing support on the steering column, wherein the housing has a lower housing part (5) on which a drive unit and a locking bolt (15) are disposed, wherein the lower housing part (5) has a passage opening for the locking bolt (15), wherein the housing support (10) is trough-shaped, **characterised in that** the lower housing part (5) has partial guide elements (6) which do not fully surround the locking bolt cross-section and project on the outer face of the lower housing part (5), and that the housing support (10) has a guide shaft (14) to accommodate the locking bolt with the partial guide elements (6).

12. Housing support (10) according to Claim 11, wherein lateral guide flanks (18) are provided in the guide shaft.

13. Housing support (10) according to Claim 11 or 12, wherein a circumferential closure band (19) is provided on the free end of the guide shaft (14).

14. Housing support (10) according to Claim 11 to 13, wherein the guide flanks (18) have a guide length of 15 mm to 50 mm, preferably 28 mm.

15. Housing support (10) according to Claim 11 or 14, wherein the housing support is produced integrally with the guide shaft (14), guide flanks (18) and closure band (19) from a magnesium alloy.

## Revendications

1. Verrou de direction électrique (1) muni d'un boîtier de construction légère destiné à l'intégration dans un support de boîtier situé côté colonne de direction, ledit boîtier présentant une partie inférieure de boîtier (5) sur laquelle est positionnée une unité d'entraînement et un pêne (15), ladite partie inférieure du boîtier (5) présentant un orifice de passage pour le pêne (15), **caractérisé en ce que**
la partie inférieure de boîtier (5) présente des éléments de guidage partiels (6) qui n'entourent pas complètement la section du pêne et qui dépassent au niveau de la face extérieure de la partie inférieure de boîtier (5).

2. Le verrou de direction électrique (1) selon la Revendication 1, dans lequel le pêne (15), lorsqu'il est en position de libération, ne dépasse pas ou ne dépasse que légèrement des éléments de guidage partiels (6).

3. Le verrou de direction électrique (1) selon l'une quelconque des Revendications précédentes dans lequel les éléments de guidage partiels (6) se prolongent au moins partiellement à l'intérieur du boîtier.

4. Le verrou de direction électrique (1) selon l'une quelconque des Revendications précédentes dans lequel les éléments de guidage partiels (6) guident le pêne (15) uniquement au niveau de son côté étroit ou dans le sens des axes de la colonne.

5. Le verrou de direction électrique (1) selon l'une quelconque des Revendications précédentes dans lequel au moins la partie inférieure de boîtier (5) et/ou les éléments de guidage partiels (6) se composent de matériau plastique.

6. Le verrou de direction électrique (1) selon l'une quelconque des Revendications précédentes dans lequel les éléments de guidage partiels (6), sous forme de rails se faisant face et présentant une forme de U (6a), sont munis de lames de renforcement (6b).

7. Le verrou de direction électrique (1) selon l'une quelconque des Revendications précédentes dans lequel les éléments de guidage partiels (6) et la partie inférieure de boîtier (5) ne forment qu'une seule pièce.

8. Le verrou de direction électrique (1) selon l'une quelconque des Revendications précédentes, dans lequel les éléments de guidage partiels (6) et le pêne (15) présentent une tolérance.

9. Le verrou de direction électrique (1) selon l'une quelconque des Revendications précédentes, dans lequel le pêne (15) est un profilé essentiellement de forme carrée, dans lequel les côtés étroits des rails en U (6a) des éléments de guidage partiels présentent des cavités optionnelles (15a).

10. Le verrou de direction électrique (1) selon l'une quelconque des Revendications précédentes, dans lequel les éléments de guidage partiels (6) peuvent être intégrés pour le positionnement dans le support de boîtier (10).

11. Un support de boîtier (10) destiné à recevoir un verrou de direction électrique (1) en construction légère, dans lequel le boîtier présente une partie inférieure de boîtier (5) sur laquelle est positionnée une unité d'entraînement et un pêne (15), ladite partie inférieure du boîtier (5) présentant un orifice de passage pour le pêne (15), dans lequel le support de boîtier (10) présente une forme concave, **caractérisé en ce que**
la partie inférieure de boîtier (5) présente des éléments de guidage partiels (6) qui n'entourent pas complètement la section du pêne et qui dépassent au niveau de la face extérieure de la partie inférieure de boîtier (5) et **en ce que**
le support de boîtier (10) présente une goulotte de guidage (14) destinée à loger le pêne avec les éléments de guidage partiels (6).

12. Le support de boîtier (10) selon la Revendication 11, dans lequel la goulotte de guidage présente des flancs de guidage latéraux (18).

13. Le support de boîtier (10) selon la Revendication 11 ou 12, dans lequel l'extrémité libre de la goulotte de guidage (14) présente une bande de finition périphérique (19).

14. Le support de boîtier (10) selon les Revendications 11 à 13, dans lequel les flancs de guidage (18) présentent une longueur de guidage comprise entre 15 mm et 50 mm, de préférence de 28 mm.

15. Le support de boîtier (10) selon les Revendications 11 à 14, dans lequel le support de boîtier est conçu en une seule pièce avec la goulotte de guidage (14), les flancs de guidage (18) et la bande de finition (19) et se compose d'un alliage de magnészunn.
